(19) Europäisches Patentamt
European Patent Office
Office européen des brevets

(11) **EP 1 852 483 B1**

(12) **EUROPEAN PATENT SPECIFICATION**

(45) Date of publication and mention of the grant of the patent:
**17.12.2008 Bulletin 2008/51**

(21) Application number: **06714217.4**

(22) Date of filing: **21.02.2006**

(51) Int Cl.:
***C09J 133/00*** *(2006.01)* ***C09J 7/02*** *(2006.01)*
***C09J 11/06*** *(2006.01)* ***G02B 5/22*** *(2006.01)*

(86) International application number:
**PCT/JP2006/303077**

(87) International publication number:
**WO 2006/090705 (31.08.2006 Gazette 2006/35)**

(54) **ADHESIVE COMPOSITION, ADHESIVE FILM, AND OPTICAL FILTER**

HAFTKLEBEMASSE, HAFTKLEBEFILM SOWIE OPTISCHES FILTER

COMPOSITION ADHÉSIVE, FILM ADHÉSIF ET FILTRE OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.02.2005 JP 2005045247**

(43) Date of publication of application:
**07.11.2007 Bulletin 2007/45**

(73) Proprietor: **Asahi Glass Company, Limited**
**Chiyoda-ku, Tokyo 100-8405 (JP)**

(72) Inventor: **MIYAKO, Takeomi**
**chihara-shi Chiba, 2908566 (JP)**

(74) Representative: **Müller-Boré & Partner Patentanwälte**
**Grafinger Strasse 2**
**81671 München (DE)**

(56) References cited:
**EP-A- 0 894 620**
**WO-A1-97/38855**
**JP-A- 10 128 898**
**JP-A- 2004 333 743**
**JP-A- 2004 333 745**
**JP-A- 2004 333 746**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to an adhesive composition having a near infrared absorptivity to absorb near infrared rays, and an adhesive film. Further, it relates to an optical filter to be installed on the observer side of a display device such as a plasma display panel (hereinafter referred to as PDP).

### BACKGROUND ART

From a PDP, not only visible light, but also near infrared rays will be radiated. Near infrared rays are likely to lead malfunction of near infrared remote control devices for home electric appliances such as home TV, air conditioners or video decks, or malfunction of other communication equipments. Accordingly, an optical filter having a near infrared absorptive film is provided on the front surface (the observer side) of a PDP, whereby the transmittance of near infrared rays of from 850 to 1,100 nm is reduced, for example, to a level of at most 20%.

A near infrared absorptive film may, for example, be one having a near infrared absorptive dye incorporated in a resin film. As a near infrared absorptive dye used for a near infrared absorptive film, various dyes have been known including e.g. a phthalocyanine type, a diimonium type, a polymethine type, a metal complex type, a squarylium type, a cyanine type and an indoaniline type.

By the way, as an optical filter to be installed on the front surface of a PDP, heretofore, an optical film having the above near infrared absorptive film and an antireflection film and/or an electromagnetic wave shielding film has been bonded to a transparent substrate such as a glass plate via an adhesive layer. The optical filter in such a case has a large number of layers and there are many steps for its production, and accordingly, simplification is required.

Thus, use of an adhesive composition containing an adhesive and a near infrared absorptive dye as an adhesive constituting the adhesive layer has been proposed (e.g. Patent Document 1). By use of this adhesive composition, an optical film having an adhesive layer having a near infrared absorptivity formed on an antireflection film or an electromagnetic wave shielding film can be obtained. Further, an optical filter can be obtained by bonding the optical film to a transparent substrate by the above adhesive layer. Accordingly, by forming an adhesive layer from an adhesive composition having a near infrared absorptivity imparted thereto, a resin film containing a near infrared absorptive dye will no more be necessary to constitute an optical filter for a PDP, whereby simplification is achieved.

Patent Document 1: JP-A-2001-207142

### DISCLOSURE OF THE INVENTION

### OBJECTS TO BE ACCOMPLISHED BY THE INVENTION

However, heretofore, since an adhesive composition containing a dye such as a near infrared absorptive dye has poor durability such as heat resistance, moisture resistance and light resistance, an optical filter having an adhesive layer comprising the adhesive composition has poor durability. Therefore, an optical filter which has no resin film containing a near infrared absorptive dye and which is excellent in durability has not yet been realized.

Under these circumstances, it is an object of the present invention to provide an adhesive composition having high durability even though it contains a dye. Further, it is an object to provide an adhesive film to obtain an optical filter which has no resin film containing a near infrared absorptive dye and which is excellent in durability. Still further, it is an object to provide an optical filter which has no resin film containing a near infrared absorptive dye and which is excellent in durability.

### MEANS TO ACCOMPLISH THE OBJECTS

The present invention provides the following:

(1) An adhesive composition comprising a phthalocyanine dye, a dithiol complex and an acrylic adhesive having an acid value of at most 10 mgKOH/g.

(2) The adhesive composition according to the above (1), wherein the phthalocyanine dye is a compound represented by the following formula:

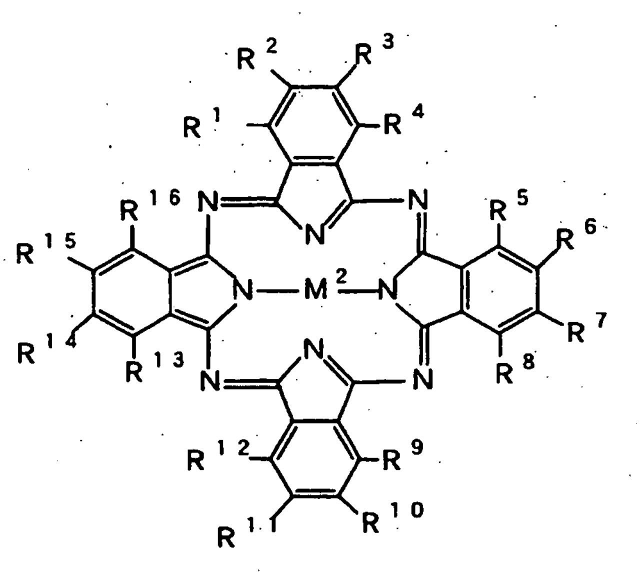

wherein each of $R^1$ to $R^{16}$ which are independent of one another, is a hydrogen atom, a halogen atom, a hydroxyl group, an amino group, a hydroxysulfonyl group, an aminosulfonyl group or a $C_{1-20}$ hydrocarbon group (provided that the hydrocarbon group may contain at least one atom selected from the group consisting of a nitrogen atom, a sulfur atom, an oxygen atom and a halogen atom), provided that adjacent two substituents may be bonded via a connecting group, and $M^2$ is a bivalent metal atom, a trivalent substituted metal atom, a tetravalent metal atom or an oxy-metal.

(3) The adhesive composition according to the above (1) or (2), which contains the phthalocyanine dye in an amount of from 0.1 to 20 parts by mass per 100 parts by mass of the acrylic adhesive.

(4) The adhesive composition according to any one of the above (1) to (3), wherein the phthalocyanine dye is a near infrared absorptive dye having the maximum absorption wavelength within a range of from 800 to 1,100 nm.

(5) The adhesive composition according to any one of the above (1) to (4), wherein the dithiol complex is a compound represented by the following formula:

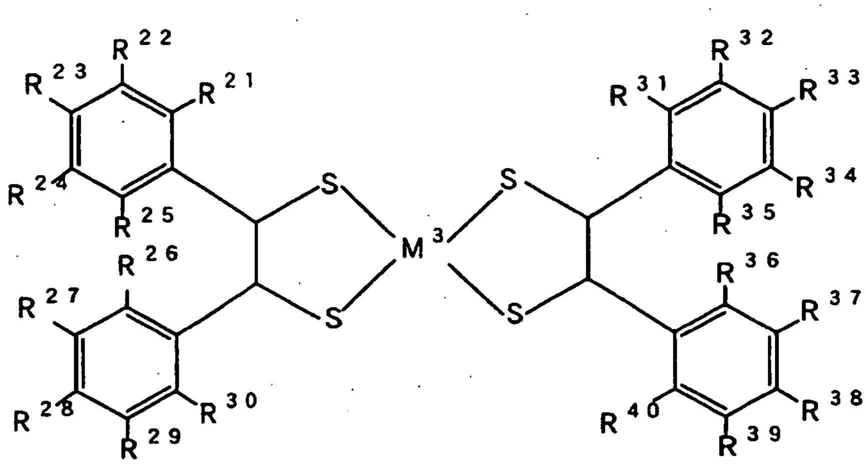

wherein each of $R^{22}$ to $R^{40}$ which are independent of one another, is a hydrogen atom, a halogen atom, an amino group, a nitro group, a cyano group, a $C_{1-20}$ alkyl group, a $C_{1-20}$ alkoxy group, a $C_{1-20}$ aryl group, a $C_{1-20}$ aralkyl group or a $C_{1-20}$ alkylamino group, and $M^3$ is copper, nickel, platinum or palladium.

(6) The adhesive composition according to any one of the above (1) to (5), which contains the dithiol complex in an amount of from 0.001 to 10 parts by mass per 100 parts by mass of the acrylic adhesive.

(7) The adhesive composition according to any one of the above (1) to (6), wherein the dithiol complex is a dithiol copper complex.

(8) The adhesive composition according to any one of the above (1) to (7), wherein the acrylic adhesive has a glass

transition point (Tg) of from -60°C to 40°C.
(9) An adhesive film having a film and an adhesive layer comprising the adhesive composition as defined in any one of the above (1) to (8) formed on the film.
(10) An optical filter having a substrate and at least one film bonded to the substrate, which has an adhesive layer comprising the adhesive composition as defined in any one of the above (1) to (8) formed either between the film and the substrate or between a plurality of films.

EFFECTS OF THE INVENTION

The adhesive composition of the present invention has high durability even though it contains a dye.
According to the adhesive film of the present invention, an optical filter which has no resin film containing a near infrared absorptive dye and which is excellent in durability will be obtained.
Further, the optical filter of the present invention has no resin film containing a near infrared absorptive dye and is excellent in durability. For example, in a case where, for an optical filter having another functional film such as an antireflection film or an electromagnetic wave shielding film laminated, the adhesive composition of the present invention is used as an adhesive to laminate such a functional film, near infrared absorption properties will be imparted to the optical filter even though no resin film layer containing a near infrared absorptive dye is provided. That is, steps for production of an optical filter can be more simplified since the lamination number can be reduced, thus lowering the production cost, as compared with a conventional optical filter having a near infrared absorptivity.

BEST MODE FOR CARRYING OUT THE INVENTION

(ADHESIVE COMPOSITION)

The adhesive composition of the present invention comprises a phthalocyanine dye, a dithiol complex and an acrylic adhesive.

(Phthalocyanine Dye)

The phthalocyanine dye is not particularly limited so long as it is a compound having a phthalocyanine skeleton (see the following chemical formula (1)). Among phthalocyanine dyes, preferred is a near infrared absorptive dye having the maximum absorption wavelength within a range of from 800 to 1,100 nm, whereby the adhesive composition will have a high near infrared absorptivity. The phthalocyanine dye having the maximum absorption wavelength within a range of from 800 to 1,100 nm may, for example, be commercial products such as "EXCOLOR IR-12", "EXCOLOR IR-14", "TX-EX-906B" and "TX-EX-910B", tradenames, manufactured by NIPPON SHOKUBAI CO., LTD.

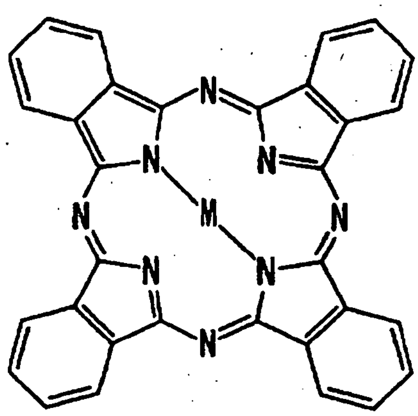

(1)

The phthalocyanine dye in the present invention is preferably a compound represented by the formula (2):

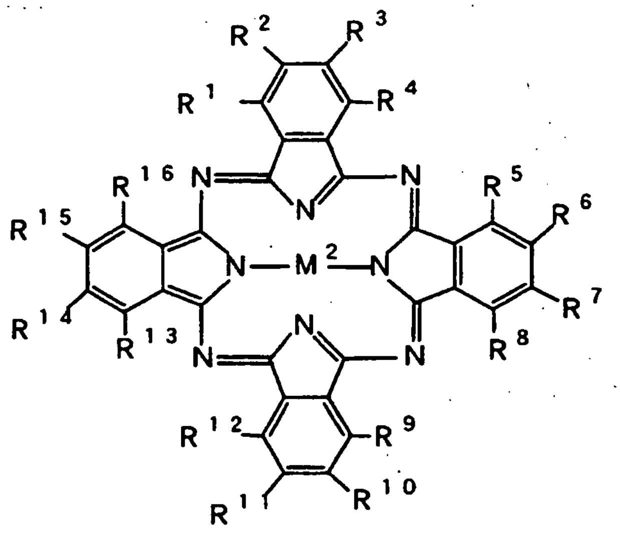

(2)

wherein each of $R^1$ to $R^{16}$ which are independent of one another, is a hydrogen atom, a halogen atom, a hydroxyl group, an amino group, a hydroxysulfonyl group, an aminosulfonyl group or a $C_{1-20}$ hydrocarbon group (provided that the hydrocarbon group may contain at least one atom selected from the group consisting of a nitrogen atom, a sulfur atom, an oxygen atom and a halogen atom), provided that adjacent two substituents may be bonded via a connecting group, and $M^2$ is a bivalent metal atom, a trivalent substituted metal atom, a tetravalent metal atom or an oxy-metal.

Usually, many of near infrared absorptive dyes have poor durability in an adhesive composition having a low Tg as compared with a conventional resin composition. However, the phthalocyanine dye in the present invention is a dye which is excellent in durability even in an adhesive composition and which has sufficient near infrared absorptive properties.

The content of the phthalocyanine dye is preferably from 0.1 to 20 parts by mass, more preferably from 0.3 to 10 parts by mass per 100 parts by mass of the acrylic adhesive. When the content of the phthalocyanine dye is at least 0.1 part by mass, sufficient properties of the dye will be achieved, and when it is at most 20 parts by mass, higher durability of the adhesive composition will be obtained. The content of the phthalocyanine dye is properly determined considering the near infrared absorptive properties desired for an optical filter to be obtained, the absorptivity coefficient of the phthalocyanine dye to be used, etc.

(Dithiol Complex)

The dithiol complex is a compound wherein a dithiol is coordinated to a metal atom via sulfur atoms constituting the thiol groups. A compound represented by the formula (3) may be mentioned as a preferred example:

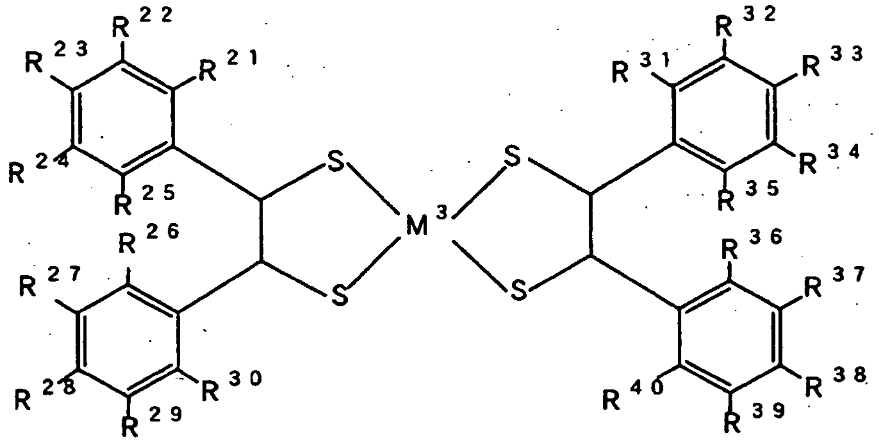

(3)

wherein each of $R^{22}$ to $R^{40}$ which are independent of one another, is a hydrogen atom, a halogen atom, an amino group, a nitro group, a cyano group, a $C_{1-20}$ alkyl group, a $C_{1-20}$ alkoxy group, a $C_{1-20}$ aryl group, a $C_{1-20}$ aralkyl group or a $C_{1-20}$ alkylamino group, and $M^3$ is copper, nickel, platinum or palladium.

$M^3$ is preferably copper or nickel, more preferably copper.

Specifically, the dithiol complex may, for example, be commercial products such as "EST-3", tradename (dithiol copper complex, bis(4-piperidylsulfonyl-1,2-benzenedithiolate-S,S')-copper-tetra-n-butylammonium), "EST-5", tradename (dithiol copper complex, bis(4-morpholinosulfonyl-1,2-dithiophenolate)-copper-tetra-n-butylammonium) and "EST-5Ni", tradename (dithiol nickel complex, bis(4-morpholinosulfonyl-1,2-dithiophenolate)-nickel-tetra-n-butylammonium), each manufactured by Sumitomo Seika Chemicals Company Limited. Among the dithiol complexes, preferred is a dithiol copper complex with a view to obtaining higher durability.

Usually, almost no light stabilizer satisfies both stability of the light stabilizer itself and excellent function as a light stabilizer i.e. effect of improving durability of the dye contained in the composition. However, the dithiol complex of the present invention is excellent in stability of the dithiol complex itself in the adhesive composition and is excellent in the quencher effect for the phthalocyanine dye which is a dye contained in the composition i.e. effect of improving stability of the phthalocyanine dye against light.

The content of the dithiol complex is preferably from 0.001 to 10 parts by mass, more preferably from 0.01 to 2 parts by mass per 100 parts by mass of the acrylic adhesive. When the content of the dithiol complex is at least 0.001 part by mass, durability will certainly be secured, and when it is at most 10 parts by mass, other physical properties as an optical filter will be secured.

(Acrylic Adhesive)

An acrylic adhesive is a polymer containing acrylic monomer units as the main component. The acrylic monomer may, for example, be (meth)acrylic acid, itaconic acid, maleic acid (anhydride), fumaric acid (anhydride), crotonic acid or an alkyl ester thereof. The "(meth)acrylic acid" means both acrylic acid and methacrylic acid. The same applies to a (meth)acrylate.

Among the acrylic monomers, (meth)acrylic acid or its alkyl ester is preferably contained as the main component. The alkyl ester of (meth)acrylic acid may, for example, be methyl (meth)acrylate, ethyl (meth)acrylate, propyl (meth) acrylate, n-butyl (meth)acrylate, n-pentyl (meth)acrylate, n-hexyl (meth)acrylate, n-heptyl (meth)acrylate, n-octyl (meth) acrylate, 2-ethylhexyl (meth)acrylate, isononyl (meth)acrylate, n-decyl (meth)acrylate or isodecyl (meth)acrylate.

Further, in order to increase the adhesive force of the adhesive, preferred is use of a monomer having a functional group (such as a hydroxyl group or a glycidyl group) capable of being a crosslinking site. The monomer having a functional group capable of being a crosslinking site may, for example, be hydroxyethyl acrylate, hydroxyethyl methacrylate, glycidyl acrylate or glycidyl methacrylate.

Further, in a case where such a monomer having a crosslinking site is used, a crosslinking agent is preferably added. The adhesive force can be secured by crosslinking a polymer by making the crosslinking agent react with the crosslinking site. The crosslinking agent may, for example, be a melamine resin, a urea resin, an epoxy resin, a metal oxide, a metal salt, a metal hydroxide, a metal chelate, a polyisocyanate, a carboxyl group-containing polymer, an acid anhydride or a polyamine, and is properly selected depending upon the type of the functional group capable of being a crosslinking site.

Further, the acrylic adhesive has an acid value of at most 10 mgKOH/g. The acid value may be 0 mgKOH/g. The acid value is preferably from 0 to 7 mgKOH/g, more preferably from 0 to 5 mgKOH/g. By the acrylic adhesive having an acid value of at most 10 mgKOH/g, durability can be improved. The acid value here means a value determined by titration with alcoholic potassium hydroxide (KOH) using phenolphthalein as an indicator.

In order that the acrylic adhesive has an acid value of at most 10 mgKOH/g, the amount of acrylic acid copolymerized is adjusted when an acrylic monomer is polymerized so that the acid value is within the above range. Acrylic adhesives having an acid value of at most 10 mgKOH/g are commercially available, and proper one is selected therefrom.

The acrylic adhesive of the present invention has a glass transition point (Tg) of preferably from -60°C to 40°C, more preferably from -50°C to 10°C.

(Organic Solvent)

The adhesive composition may contain an organic solvent. The organic solvent may, for example, be an aromatic compound such as toluene or xylene; an amide such as N-methyl-2-pyrrolidone, dimethylformamide or dimethylacetone; a ketone such as methyl ethyl ketone, methyl isobutyl ketone or acetone; an alcohol such as methanol, ethanol or i-propyl alcohol; a hydrocarbon such as hexane; or tetrahydrofuran. These organic solvents may be used alone or as a proper mixture as the case requires.

(Other Components)

The adhesive composition of the present invention may contain, as the case requires, a color tone correcting dye having the maximum absorption wavelength within a range of from 300 to 800 nm, a leveling agent, an antistatic agent, a thermal stabilizer, an antioxidant, a dispersing agent, a flame retardant, a lubricant, a plasticizer, an ultraviolet absorber, or a near infrared absorptive dye other than the phthalocyanine dye.

The above adhesive composition contains the phthalocyanine dye as a dye, contains the dithiol complex as a stabilizer and contains the acrylic adhesive having an acid value of at most 10 mgKOH/g as an adhesive, and thereby has high durability. That is, by the above constitution, an adhesive composition which satisfies both excellent near infrared absorptive effect and excellent durability of a dye at the same time, even though it has a low Tg, can be obtained.

(ADHESIVE FILM)

The adhesive film of the present invention has a film and an adhesive layer comprising the above-described adhesive composition formed on the film.

(Film)

The film in the present invention is not particularly limited regarding its material, thickness, etc. so long as it is in a film form or in a plate form.

Such a film may, for example, be a releasable film having releasability, a support film, or a film having another function (hereinafter referred to as a functional film).

The functional film may, for example, be an ultraviolet absorbing film which prevents deterioration of the dye by ultraviolet rays thereby to improve light resistance, or a color tone correcting film which absorbs a light in a specific wavelength range other than ultraviolet rays. The specific wavelength which the color tone correcting film absorbs is not limited to visible light and may include near infrared rays, and the color tone correcting film may be one absorbing light in a plurality of specific wavelength ranges. Further, as the functional film, an antireflection film to improve visibility of images, an electromagnetic wave shielding film to cut electromagnetic waves emitted from a display device such as a PDP, a hard coat layer to impart abrasion resistance or a layer having self-repair properties, an antifouling layer to prevent stain on the outermost surface, or an adhesive or bonding layer to laminate these layers, may, for example, be mentioned.

The material of the film is not limited, but preferred is a resin film in view of easiness of handling when the film is handled e.g. during preparation of the adhesive film. Such a resin film is a film made of any one of a polyester such as polyethylene terephthalate (PET) or polybutylene terephthalate (PBT); a polyolefin such as polyethylene or polypropylene; a polyacrylate such as polymethyl methacrylate (PMMA); a polycarbonate (PC); a polystyrene; a triacetate; a polyvinyl alcohol; a polyvinyl chloride; a polyvinylidene chloride; an ethylene-vinyl acetate copolymer; a polyvinyl butyral; a polyurethane or a cellophane.

The adhesive film may comprise one or more films.

(Adhesive Layer)

The adhesive layer can be formed, for example, by applying the adhesive composition to the film and drying it. In such a case, a method of applying the adhesive composition may, for example, be a coating method such as dip coating, spray coating, spinner coating, bead coating, wire bar coating, blade coating, roller coating, curtain coating, slit die coating, gravure coating, slit reverse coating, microgravure coating or comma coating.

The thickness of the adhesive layer is preferably from 0.3 to 50.0 μm, more preferably from 0.5 to 30.0 μm. When it is at least 0.3 μm, a sufficient near infrared absorptivity will be achieved, and when it is at most 50 μm, remaining of the organic solvent at the time of forming can be reduced.

After the adhesive layer is formed on the film, a mold release film is preferably bonded on the adhesive layer, whereby the adhesive layer can be protected until the time of use, such being favorable in view of operation properties. The mold release film may be the same as the above releasable film.

(OPTICAL FILTER)

The filter of the present invention has at least one film bonded to the substrate, and has an adhesive layer comprising the above-described adhesive composition formed at least either between the film and the substrate or between a plurality of films.

The film may be the same film as used for the above adhesive film.

The substrate may, for example, be a transparent substrate made of e.g. glass or a transparent and highly rigid polymer material. It is preferably a transparent substrate made of e.g. glass, tempered or semi-tempered glass, polycarbonate or polyacrylate. An optical filter having an adhesive film bonded to the transparent substrate exhibits function as a protective plate of a display device such as a PDP.

A method for producing the optical filter is not particularly limited. An optical filter having an adhesive layer comprising the above adhesive composition between the substrate and the film can be obtained, for example, as follows. An adhesive film having an adhesive layer formed on a releasable film is prepared, and the adhesive layer of the adhesive film is bonded to a substrate. Then, the releasable film is peeled off from the adhesive layer of the adhesive film, and a functional film is bonded to the exposed adhesive layer and as the case requires, another functional film is bonded thereto.

Further, as another production method, an adhesive film having an adhesive layer formed on a functional film is prepared, and the adhesive layer of the adhesive film is bonded to a substrate. Then, as the case requires, another functional film is bonded to obtain an optical filter.

An optical filter having an adhesive layer comprising the above adhesive composition between a plurality of films can be obtained, for example, as follows. First, a functional film is bonded to a substrate, then an adhesive film having an adhesive layer comprising the above adhesive composition formed on a releasable film is prepared, and the adhesive layer of the adhesive film is bonded to the functional film. Then, the releasable film is peeled off from the adhesive layer of the adhesive film, and another functional film is bonded to the exposed adhesive layer.

Further, as another production method, first, a functional film is bonded to a substrate, then, an adhesive film having an adhesive layer comprising the above adhesive composition formed on another functional film is prepared, and the adhesive layer of the adhesive film is bonded to the above functional film to obtain an optical filter.

The optical filter of the present invention can be used as an optical filter for a display device such as a flat display device such as a PDP, a plasma addressed liquid crystal (PALC) display panel or a field emission display (FED) panel or a cathode ray tube (CRT).

In such a case, the optical filter may be installed distant from the display device or may be bonded directly to the surface of the display device so long as it is installed on the observer side of the display device.

In the optical filter, the adhesive layer is colored by a dye, but in general, the optical filter is preferably achromatic since it is installed on the observer side of a display device such as a PDP. Based on the illuminant C calculated in accordance with JIS Z 8701-1999, the chromaticity coordinate corresponding to achromatic is (x,y)=(0.310,0.316), and therefore, of the optical filter of the present invention, it is preferred that the chromaticity coordinate (x,y)= $(0.310\pm0.100, 0.316\pm0.100)$. A method to adjust the chromaticity coordinate of the optical filter to be the above value, may, for example, be a method of properly selecting the type and the content of the phthalocyanine dye to be incorporated in the adhesive and the color tone correcting dye, and then selecting the type of the film and the substrate depending upon the chromaticity.

Further, the luminous average transmittance of the optical filter is preferably at least 25%, more preferably at least 45%. As a method to make the luminous average transmittance of the optical filter be at least 45%, a method of selecting a film having high transparency, or a method of properly selecting the type and the content of the phthalocyanine dye to be incorporated in the adhesive and the color tone correcting dye, may, for example, be mentioned. The luminous average transmittance of the optical film is preferably at most 80%, more preferably at most 90%, more preferably at most 100%.

Further, it is preferred that both the above chromaticity coordinate (x,y) and the above luminous average transmittance are satisfied at the same time.

Since the above-described optical filter has an adhesive layer having a near infrared absorptivity, it is simplified without having a resin film containing a near infrared absorptive dye. In addition, although the adhesive layer contains a dye, the dye hardly deteriorates and is excellent in durability, and thus the optical filter is also excellent in durability.

## EXAMPLES

Now, the present invention will be described in further detail with reference to Examples of the present invention (Examples 1 to 7) and Comparative Examples (Examples 8 to 12).

In the following Examples, the acid value of the acrylic adhesive was measured as follows in accordance with JIS K 3504.

First, a sample was stirred well and mixed, and about 2 g thereof was accurately weighed by a balance. Then, about 20 ml of a solvent mixture of toluene/methanol (=7/3 volume ratio) was added, followed by stirring to dissolve the sample. Then, two to three drops of a phenol phthalein indicator were added, followed by stirring again, and then titration with a 0.02 mol/L alcoholic KOH was carried out, and a point where the solution remained pail pink for 15 seconds was regarded as the end point. Further, as a blank test, the above operation was conducted only with a solvent mixture without a sample.

$$\text{Acid value (mgKOH/g)} = [(V_1 - V_2) \times f \times 1.122]/S$$

$V_1$: Addition amount (ml) of alcoholic KOH in the test
$V_2$: Addition amount (ml) of alcoholic KOH in the blank test
f: Factor of alcoholic KOH
S: Weight (g) of sample

EXAMPLE 1

A near infrared absorptive dye (NIR absorptive dye) comprising 0.0482 g of a phthalocyanine dye ("EXCOLOR IR-12", tradename, manufactured by NIPPON SHOKUBAI CO., LTD.), 0.0289 g of a phthalocyanine dye ("EXCOLOR IR-14", tradename, manufactured by NIPPON SHOKUBAI CO., LTD.), 0.0240 g of a phthalocyanine dye ("TX-EX-906B", tradename, manufactured by NIPPON SHOKUBAI CO., LTD.) and 0.1295 g of a phthalocyanine dye ("TX-EX-910B", tradename, manufactured by NIPPON SHOKUBAI CO., LTD.), and 0.0096 g of a dithiol complex type light stabilizer ("EST-5", tradename, manufactured by Sumitomo Seika Chemicals Company Limited) were dissolved in 7.7 g of methyl ethyl ketone. In this solution, 42.3 g of an acrylic adhesive ("NCK101", tradename, manufactured by TOYO INK MFG. CO., LTD, acid value: 0 mgKOH/g, Tg: -20°C) and 0.5 g of a crosslinking agent ("Coronate HL", tradename, manufactured by NIPPON POLYURETHANE INDUSTRY CO., LTD.) were dissolved to prepare an adhesive composition. This adhesive composition was applied to an antireflection film with a thickness of 300 μm ("Arctop URP2199", tradename, manufactured by Asahi Glass Company, Limited) by an applicator so that the thickness of the dry coating film was 25 μm to obtain an adhesive film. This adhesive film was bonded to glass as a substrate by a rubber roller to obtain an optical filter.

Acrylic adhesives, NIR absorptive dyes and dithiol complexes used in the respective Examples are shown in Table 1.

TABLE 1

| Ex. dye | Acrylic adhesive | | NIR absorptive | Coloring dye | Dithiol complex (light stabilizer) | Adherend |
|---|---|---|---|---|---|---|
| | Product | Acid value | | | | |
| 1 | NCK101 | 0 | IR12/IR14/ TXEX906B/ TXEX910B | - | EST-5 | Glass |
| 2 | NCK101 | 0 | | - | EST-3 | Glass |
| 3 | NCK101 | 0 | | VioletAR | EST-5 | Copper mesh |
| 4 | NCK101 | 0 | IR12 | - | EST-5 | Glass |
| 5 | EXK04-488 | 6.2 | | - | EST-5 | Glass |
| 6 | SK1501B | 7.8 | | - | EST-5 | Glass |
| 7 | NCK101 | 0 | | - | EST-5Ni | Glass |
| 8 | SK2094 | 27.2 | | - | EST-5 | Glass |
| 9 | NCK101 | 0 | IR12/IR14/ TXEX906B/ TXEX910B | - | LA-52 | Glass |
| 10 | NCK101 | 0 | | - | LA-31 | Glass |
| 11 | NCK101 | 0 | | - | - | Glass |
| 12 | NCK101 | 0 | IRG-022 | - | EST-5Ni | Glass |

EXAMPLE 2

An optical filter was obtained in the same manner as in Example 1 except that the light stabilizer was changed to "EST-3", tradename, manufactured by Sumitomo Seika Chemicals Company Limited.

EXAMPLE 3

An adhesive film was obtained in the same manner as in Example 1 except that 0.02 g of a coloring dye

("Kayaset Violet A-R", tradename, manufactured by Nippon Kayaku Co., Ltd.) was added. Using a mesh film (manufactured by Dai Nippon Printing Co., Ltd.) having a copper foil mesh (mesh width: 12 μm, mesh pitch: 250 μm, mesh thickness: 12 μm) laminated on a polyethylene terephthalate film with a thickness of 100 μm via an adhesive, as an electromagnetic wave absorbing film, the surface having no mesh laminated was bonded to glass via an adhesive layer. The adhesive layer of the adhesive film was bonded to the surface on the mesh side of the copper foil mesh film, followed by treatment in an autoclave (60°C, 5 atom, 30 minutes) to obtain an optical filter.

EXAMPLE 4

An optical filter was obtained in the same manner as in Example 1 except that the NIR absorptive dye was changed to only 0.02 g of a phthalocyanine dye ("EXCOLOR IR-12", tradename, manufactured by NIPPON SHOKUBAI CO., LTD.)

EXAMPLE 5

An optical filter was obtained in the same manner as in Example 4 except that the acrylic adhesive was changed to 53.2 g of an acrylic adhesive ("EXK04-488", tradename, manufactured by TOYO INK MFG. CO., LTD, acid value: 6.2 mgKOH/g, Tg: -51°C).

EXAMPLE 6

An optical filter was obtained in the same manner as in Example 4 except that the acrylic adhesive was changed to 62.6 g of an acrylic adhesive ("SK-DYNE 1501B", tradename, manufactured by Soken Chemical & Engineering Co., Ltd., acid value: 7.8 mgKOH/g, Tg: -52°C).

EXAMPLE 7

An optical filter was obtained in the same manner as in Example 4 except that the light stabilizer was changed to "EST-5Ni", tradename, manufactured by Sumitomo Seika Chemicals Company Limited.

EXAMPLE 8

An optical filter was obtained in the same manner as in Example 4 except that the acrylic adhesive was changed to 62.6 g of an acrylic adhesive ("SK-DYNE 2094", tradename, manufactured by Soken Chemical & Engineering Co., Ltd., acid value: 27.2 mgKOH/g, Tg: -40°C).

EXAMPLE 9

An optical filter was obtained in the same manner as in Example 1 except that the light stabilizer was changed to a hindered amine type light stabilizer ("ADK STAB LA-52", tradename, manufactured by Asahi Denka Co., Ltd.)

EXAMPLE 10

An optical filter was obtained in the same manner as in Example 1 except that the light stabilizer was changed to an ultraviolet absorber ("ADK STAB LA-31", tradename, manufactured by Asahi Denka Co., Ltd.)

EXAMPLE 11

An optical filter was obtained in the same manner as in Example 1 except that no light stabilizer was added.

EXAMPLE 12

An optical filter was obtained in the same manner as in Example 11 except that the NIR absorptive dye was changed to 0.02 g of a diimonium dye ("IRG-022", tradename, manufactured by Nippon Kayaku Co., Ltd.) and that 0.02 g of a dithiol Ni complex dye ("EST-5Ni", tradename, manufactured by Sumitomo Seika Chemicals Company Limited) was used as the light stabilizer.

The optical filters in Examples 1 to 12 were evaluated by the following methods with respect to durability (heat resistance, moisture resistance and light resistance). The evaluation results are shown in Table 2.

(1) Transmittance: Using a spectrophotometer (UV-3100, manufactured by Shimadzu Corporation), a spectrum of a test specimen of 80 mm square cut out from each sample was measured within a range of from 380 to 1,000 nm, and the luminous average transmittance Tv was calculated in accordance with JIS Z 8701-1999. Further; the transmittance at the maximum absorption wavelength within a range of from 800 nm to 1,000 nm was regarded as Tn. Each value was obtained employing the transmittance of the air in the room as the control.
(2) Evaluation of moisture resistance: An optical filter was left to stand for 500 hours in a constant temperature and constant humidity container (KCH-1000, manufactured by TOKYO RIKAKIKAI CO., LTD.) set at a temperature of 60°C and a humidity of 95%RH. Then, a test specimen of 80 mm square was cut out from each optical filter taken out from the constant temperature and constant humidity container, and $Tv_1$ and $Tn_1$ were measured by the above method (1). Further, $Tv_0$ and $Tn_0$ of the optical filter before it was put in the constant temperature and constant humidity container were measured by the above method (1) to determine the difference ($\Delta Tv$) between $Tv_1$ and $Tv_0$ and the difference ($\Delta Tn$) between $Tn_1$ and $Tn_0$, which are regarded as indices to the moisture resistance.
(3) Evaluation of heat resistance: An optical filter was left to stand for 500 hours in a constant temperature container (manufactured by TOKYO RIKAKIKAI CO., LTD.) set at a temperature of 80°C. Then, a test specimen of 80 mm square was cut out from each optical filter taken out from the constant temperature container, and $Tv_1$ and $Tn_1$ were measured by the above method (1). Further, $Tv_0$ and $Tn_0$ of the optical filter before it was put in the constant temperature container were measured by the above method (1) to determine the difference ($\Delta Tv$) between $Tv_1$ and $Tv_0$ and the difference ($\Delta Tn$) between $Tn_1$ and $Tn_0$, which were regarded as indices to the moisture resistance.
(4) Evaluation of light resistance: Using a light resistance testing apparatus (xenon fade meter X-15F, manufactured by SUGA TEST INSTRUMENTS Co., Ltd.), the optical filter was irradiated with light having a wavelength of at least 380 nm at a dose of 200 MJ/$cm^2$, and then a test specimen of 80 mm square was cut out from the optical filter, and $Tv_1$ and $Tn_1$ were measured by the above method (1). Further, $Tv_0$ and $Tn_0$ of the optical filter before it was put in the light resistance testing apparatus were measured by the above method (1) to determine the difference ($\Delta Tv$) between $Tv_1$ and $Tv_0$ and the difference ($\Delta Tn$) between $Tn_1$ and $Tn_0$, which were regarded as indices to the moisture resistance.

Table 2

| Ex. | Results of durability test | | | | | |
|---|---|---|---|---|---|---|
| | Heat resistance | | Moisture resistance | | Light resistance | |
| | ΔTv | ΔTn | ΔTv | ΔTn | ΔTv | ΔTn |
| 1 | 0.1 | 0.2 | -0.3 | -0.3 | 0.5 | 0.5 |
| 2 | 0.1 | 0.5 | 0.4 | 0.5 | 0.2 | 0.7 |
| 3 | 0.1 | 0.2 | 0.1 | 0.4 | 0.5 | 0.6 |
| 4 | -0.1 | 0.0 | 0.2 | 0.6 | 0.3 | 0.6 |
| 5 | 0.0 | -0.8 | 0.0 | -0.4 | -0.1 | -0.4 |
| 6 | -0.3 | -0.2 | -0.1 | -0.3 | 1.2 | 2.4 |
| 7 | 0.2 | 2.4 | 0.2 | 0.4 | 0.0 | 2.3 |
| 8 | 4.9 | 7.6 | 4.4 | 6.6 | 1.2 | 8.3 |
| 9 | 0.4 | 0.3 | 0.4 | 0.7 | 13.2 | 26.5 |
| 10 | 0.3 | 0.5 | 0.1 | 0.2 | 12.1 | 23.8 |
| 11 | -1.4 | -1.3 | -2.6 | -2.1 | -21.7 | 47.7 |
| 12 | 2.8 | 39.2 | 2.6 | 42.0 | 2.4 | 42.2 |

The optical filters in Examples 1 to 7 which have an adhesive layer comprising an adhesive composition containing a phthalocyanine dye, a dithiol complex and an acrylic adhesive having an acid value of at most 10 mgKOH/g were excellent in all of heat resistance, moisture resistance and light resistance.

Whereas, the optical filter in Example 8 wherein the acid value of the acrylic adhesive in the adhesive composition exceeds 10 mgKOH/g, was poor in all of heat resistance, moisture resistance and light resistance.

The optical filters in Examples 9 to 11 wherein no dithiol complex was contained as the light stabilizer were

particularly poor in light resistance.

The optical filter in Example 12 wherein no phthalocyanine dye was contained as the NIR absorptive dye but only a dye other than the phthalocyanine dye was used, was poor in all of heat resistance, moisture resistance and light resistance.

INDUSTRIAL APPLICABILITY

The adhesive composition of the present invention has high durability even though it contains a dye. Thus, an adhesive film to obtain an optical filter which has no resin film containing a near infrared absorptive dye and which is excellent in durability can be provided. The optical film of the present invention can be widely used for a display device such as a plasma display panel.

The entire disclosure of Japanese Patent Application No. 2005-045247 filed on February 22, 2005 including specification, claims and summary is incorporated herein by reference in its entirety

## Claims

1. An adhesive composition comprising a phthalocyanine dye, a dithiol complex and an acrylic adhesive having an acid value of at most 10 mgKOH/g.

2. The adhesive composition according to Claim 1, wherein the phthalocyanine dye is a compound represented by the following formula:

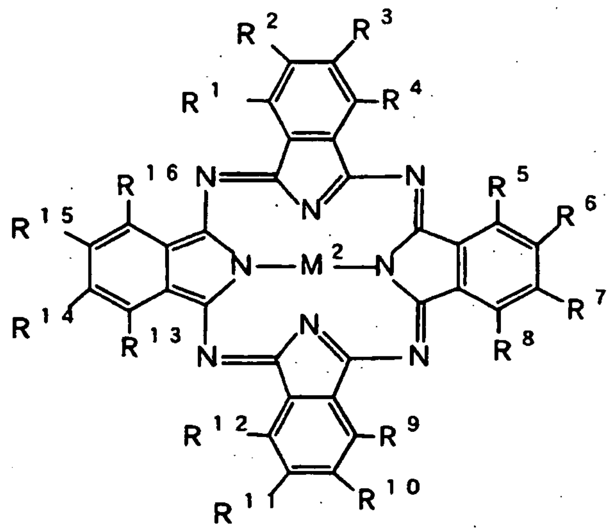

wherein each of $R^1$ to $R^{16}$ which are independent of one another, is a hydrogen atom, a halogen atom, a hydroxyl group, an amino group, a hydroxysulfonyl group, an aminosulfonyl group or a $C_{1-20}$ hydrocarbon group (provided that the hydrocarbon group may contain at least one atom selected from the group consisting of a nitrogen atom, a sulfur atom, an oxygen atom and a halogen atom), provided that adjacent two substituents may be bonded via a connecting group, and $M^2$ is a bivalent metal atom, a trivalent substituted metal atom, a tetravalent metal atom or an oxy-metal.

3. The adhesive composition according to Claim 1 or 2, which contains the phthalocyanine dye in an amount of from 0.1 to 20 parts by mass per 100 parts by mass of the acrylic adhesive.

4. The adhesive composition according to any one of Claims 1 to 3, wherein the phthalocyanine dye is a near infrared absorptive dye having the maximum absorption wavelength within a range of from 800 to 1,100 nm.

5. The adhesive composition according to any one of Claims 1 to 4, wherein the dithiol complex is a compound represented by the following formula:

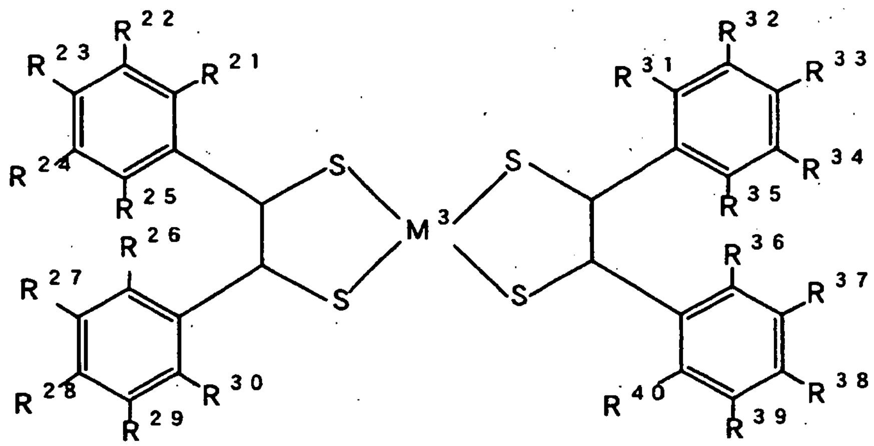

wherein each of $R^{22}$ to $R^{40}$ which are independent of one another, is a hydrogen atom, a halogen atom, an amino group, a nitro group, a cyano group, a $C_{1-20}$ alkyl group, a $C_{1-20}$ alkoxy group, a $C_{1-20}$ aryl group, a $C_{1-20}$ aralkyl group or a $C_{1-20}$ alkylamino group, and $M^3$ is copper, nickel, platinum or palladium.

**6.** The adhesive composition according to any one of Claims 1 to 5, which contains the dithiol complex in an amount of from 0.001 to 10 parts by mass per 100 parts by mass of the acrylic adhesive.

**7.** The adhesive composition according to any one of Claims 1 to 6, wherein the dithiol complex is a dithiol copper complex.

**8.** The adhesive composition according to any one of Claims 1 to 7, wherein the acrylic adhesive has a glass transition point (Tg) of from -60°C to 40°C.

**9.** An adhesive film having a film and an adhesive layer comprising the adhesive composition as defined in any one of Claims 1 to 8 formed on the film.

**10.** An optical filter having a substrate and at least one film bonded to the substrate, which has an adhesive layer comprising the adhesive composition as defined in any one of Claims 1 to 8 formed either between the film and the substrate or between a plurality of films.

**Patentansprüche**

**1.** Haftmittelzusammensetzung, umfassend einen Phthalocyanin-Farbstoff, einen Dithiolkomplex und ein acrylisches Haftmittel mit einem Säurewert von höchstens 10 mgKOH/g.

**2.** Haftmittelzusammensetzung gemäß Anspruch 1, wobei der Phthalocyanin-Farbstoff eine Verbindung ist, dargestellt durch die folgende Formel:

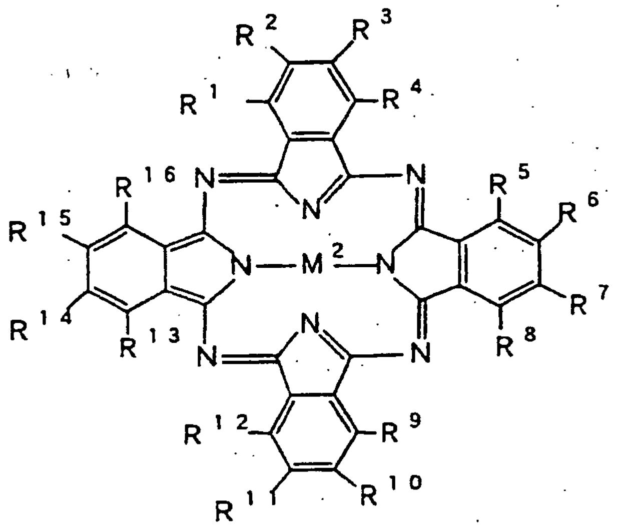

worin $R^1$ bis $R^{16}$, welche voneinander unabhängig sind, jeweils ein Wasserstoffatom, ein Halogenatom, eine Hydroxylgruppe, eine Aminogruppe, eine Hydroxysulfonylgruppe, eine Aminosulfonylgruppe oder eine $C_{1-20}$-Kohlenwasserstoffgruppe (mit der Maßgabe, daß die Kohlenwasserstoffgruppe mindestens ein Atom, ausgewählt aus der Gruppe, bestehend aus einem Stickstoffatom, einem Schwefelatom, einem Sauerstoffatom und einem Halogenatom, enthalten kann) sind, mit der Maßgabe, daß zwei angrenzende Substituenten über eine verknüpfende Gruppe gebunden sein können, und $M^2$ ein zweiwertiges Metallatom, ein dreiwertiges substituiertes Metallatom, ein vierwertiges Metallatom oder ein Oxymetall ist.

3. Haftmittelzusammensetzung gemäß Anspruch 1 oder 2, welche den Phthalocyaninfarbstoff in einer Menge von 0,1 bis 20 Masse-Teile pro 100 Masse-Teilen des acrylischen Haftmittels enthält.

4. Haftmittelzusammensetzung gemäß einem der Ansprüche 1 bis 3, wobei der Phthalocyaninfarbstoff ein im nahen Infrarot absorbierender Farbstoff mit dem Absorptionswellenlängenmaximum innerhalb des Bereichs von 800 bis 1100 nm ist.

5. Haftmittelzusammensetzung gemäß einem der Ansprüche 1 bis 4, wobei der Dithiolkomplex eine Verbindung ist, dargestellt durch die allgemeine Formel:

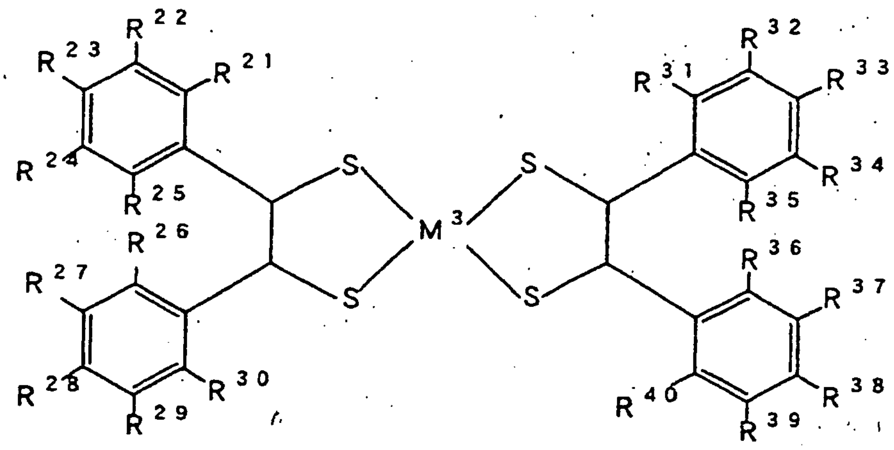

worin $R^{22}$ bis $R^{40}$, welche voneinander unabhängig sind, jeweils ein Wasserstoffatom, ein Halogenatom, eine Aminogruppe, eine Nitrogruppe, eine Cyanogruppe, eine $C_{1-20}$ Alkylgruppe, eine $C_{1-20}$ Alkoxygruppe, eine $C_{1-20}$ Aryl-

gruppe, eine $C_{1-20}$ Aralkylgruppe oder eine $C_{1-20}$ Alkylaminogruppe sind, und $M^3$ Kupfer, Nickel, Platin oder Palladium ist.

6. Haftmittelzusammensetzung gemäß einem der Ansprüche 1 bis 5, welche den Dithiolkomplex in einer Menge von 0,001 bis 10 Masse-Teile pro 100 Masse-Teilen des acrylischen Haftmittels enthält.

7. Haftmittelzusammensetzung gemäß einem der Ansprüche 1 bis 6, wobei der Dithiolkomplex ein Dithiol-Kupferkomplex ist.

8. Haftmittelzusammensetzung gemäß einem der Ansprüche 1 bis 7, wobei das acrylische Haftmittel einen Glasübergangspunkt (Tg) von -60°C bis 40°C aufweist.

9. Haftmittelfolie mit einer Folie und einer Haftmittelschicht, umfassend die Haftmittelzusammensetzung, wie in einem der Ansprüche 1 bis 8 definiert, gebildet auf der Folie.

10. Optischer Filter mit einem Substrat und mindestens einer Folie, gebunden an das Substrat, welcher eine Haftmittelschicht, umfassend die Haftmittelzusammensetzung, wie in einem der Ansprüche 1 bis 8 definiert, gebildet entweder zwischen der Folie und dem Substrat oder zwischen einer Vielzahl von Folien, aufweist.

**Revendications**

1. Composition adhésive comprenant un colorant phtalocyanine, un complexe de dithiol et un adhésif acrylique ayant un indice d'acide d'au plus 10 mg de KOH/g.

2. Composition adhésive selon la revendication 1, dans laquelle le colorant phtalocyanine est un composé représenté par la formule suivante :

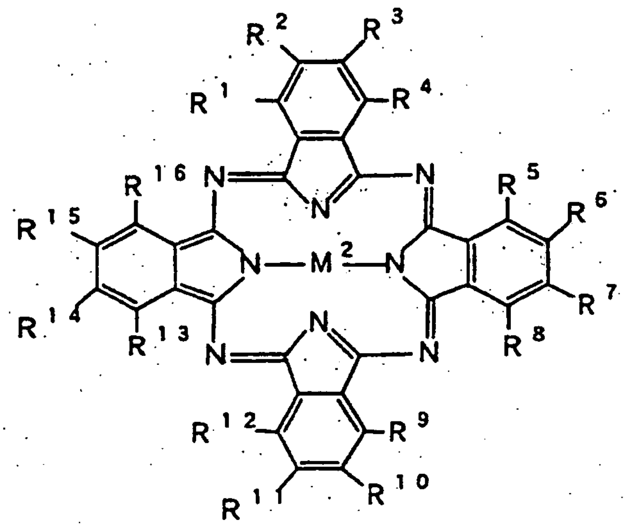

dans laquelle chacun de $R^1$ à $R^{16}$, qui sont indépendants les uns des autres, représente un atome d'hydrogène, un atome d'halogène un groupe hydroxyle, un groupe amino, un groupe hydroxysulfonyle, un groupe aminosulfonyle ou un groupe hydrocarboné en $C_{1-20}$ (étant entendu que le groupe hydrocarboné peut contenir au moins un atome choisi dans le groupe constitué d'un atome d'azote, d'un atome de soufre, d'un atome d'oxygène et d'un atome d'halogène), étant entendu que deux substituants adjacents peuvent être liés par un groupe de liaison, et $M^2$ est un atome de métal bivalent, un atome de métal trivalent substitué, un atome de métal tétravalent ou un oxy-métal.

3. Composition adhésive selon la revendication 1 ou 2, qui contient le colorant phtalocyanine en une quantité de 0,1 à 20 parties en masse pour 100 parties en masse de l'adhésif acrylique.

4. Composition adhésive selon l'une quelconque des revendications 1 à 3, dans laquelle le colorant phtalocyanine est

un colorant absorbant l'infrarouge proche dont la longueur d'onde d'absorption maximale est dans la plage de 800 à 1100 nm.

5. Composition adhésive selon l'une quelconque des revendications 1 à 4, dans laquelle le complexe de dithiol est un composé représenté par la formule suivante :

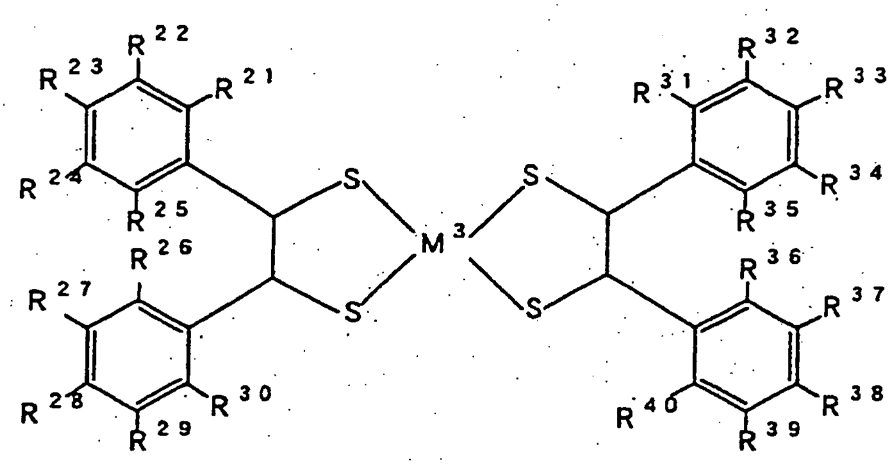

dans laquelle chacun de $R^{22}$ à $R^{40}$, qui sont indépendants les uns des autres, est un atome d'hydrogène, un atome d'halogène, un groupe amino, un groupe nitro, un groupe cyano, un groupe alkyle en $C_{1-20}$, un groupe alcoxy en $C_{1-20}$, un groupe aryle en $C_{1-20}$, un groupe aralkyle en $C_{1-20}$ ou un groupe alkylamino en $C_{1-20}$, et $M^3$ est cuivre, nickel, platine ou palladium.

6. Composition adhésive selon l'une quelconque des revendications 1 à 5, qui contient le complexe de dithiol en une quantité de 0,001 à 10 parties en masse pour 100 parties en masse de l'adhésif acrylique.

7. Composition adhésive selon l'une quelconque des revendications 1 à 6, dans laquelle le complexe de dithiol est un complexe de dithiol cuivre.

8. Composition adhésive selon l'une quelconque des revendications 1 à 7, dans laquelle l'adhésif acrylique possède un point de transition vitreuse (Tg) de -60 °C à 40 °C.

9. Film adhésif ayant un film et une couche d'adhésif comprenant la composition adhésive telle que définie dans l'une quelconque des revendications 1 à 8, formée sur le film.

10. Filtre optique ayant un substrat et au moins un film lié au substrat, qui possède une couche d'adhésif comprenant la composition adhésive telle que définie dans l'une quelconque des revendications 1 à 8, formée soit entre le film et le substrat soit entre plusieurs films.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001207142 A
- JP 2005045247 A